# EUROPEAN PATENT APPLICATION

(11) **EP 4 693 789 A1**
(43) Date of publication of application: **11.02.2026**
(21) Application number: 24778562.9
(22) Date of filing: 17.01.2024
(51) Int. Cl.: H02J 1/12, H02M 3/00

(54) **DC/DC CONVERTER AND POWER SUPPLY SYSTEM**

(30) Priority: 24.03.2023 JP 2023047668
(71) Applicant: Panasonic Intellectual Property Management Co., Ltd., Kadoma-shi, Osaka 571-0057 (JP)
(72) Inventor: HIROKAWA, Takayuki, Kadoma-shi, Osaka 571-0057 (JP); MINE, Koki, Kadoma-shi, Osaka 571-0057 (JP); TAKEUCHI, Masaki, Kadoma-shi, Osaka 571-0057 (JP)
(74) Representative: Novagraaf International SA
(86) International application number: PCT/JP2024/001146
(87) International publication number: WO 2024/202416

(57) **Abstract**

A DC/DC converter includes a power conversion unit, a controller, and a second processing unit. The power conversion unit is configured to convert a direct-current (DC) power supplied from power supply 2, and output the converted DC power to an output terminal commonly used by other one or more DC/DC converters. The controller includes a first processing unit and is configured to control the power conversion unit. The first processing unit is configured to output a target signal for an output voltage of the DC/DC converter such that the output voltage and an output current of the DC/DC converter has a drooping characteristic. The second processing unit is configured to output a correction signal based on a difference between the output current and a representative current among the output current and other one or more output currents. The controller is configured to control the output voltage in accordance with the target signal corrected based on the correction signal.

## Description

### TECHNICAL FIELD

The present disclosure relates to a DC/DC converter and a power supply system.

### BACKGROUND ART

PTL 1 discloses a switching power supply system. The switching power supply system includes switching power supplies and droop control circuits. Each of the switching power supplies is configured to receive a direct current (DC) from a corresponding one of power supply sources, and to output a DC to a common output terminal. Each of the droop control circuits is included in a corresponding one of the switching power supplies. Each of the droop control circuits controls a duty ratio of a pulse width modulation (PWM) signal for driving a switching element included in a corresponding one of the switching power supplies. Then, each of the droop control circuits controls the duty ratio described above to provide drooping characteristics in which the output voltage drops according to an increase of the output current.

### CITATION LIST

### Patent Literature

PTL 1: Japanese Patent Laid-Open Publication No. 2020-22331

### SUMMARY OF INVENTION

The present disclosure provides a DC/DC converter and a power supply system which facilitate balancing among respective output currents of DC/DC converters connected, in parallel to one another, to a load.

A DC/DC converter according to an aspect of the present disclosure includes a power conversion unit, a controller including a first processing unit, and a second processing unit. The power conversion unit is configured to convert a direct-current (DC) power supplied from a power supply, and output the converted DC power to an output terminal to which other one or more DC/DC converters commonly output respective one or more DC powers. The first processing unit is configured to output a target signal for an output voltage of the power conversion unit such that the output voltage has a drooping characteristic in which the output voltage of the power conversion unit drops according to an increase of an output current of the power conversion unit. The controller is configured to control the power conversion unit. The second processing unit is configured to output a correction signal based on a difference between the output current and a representative current among the output current and other one or more output currents output from the other one or more DC/DC converters. The controller is configured to: obtain the target signal corrected based on the correction signal; and control the output voltage in accordance with the target signal corrected based on the correction signal.

A power supply system according to an aspect of the present disclosure includes the DC/DC converter, the power supply configured to supply a DC power to the DC/DC converter, and a load coupled to the output terminal and configured to receive a DC power supplied from the DC/DC converter.

The DC/DC converter and power supply system according to the aspect of the present disclosure have an advantage of facilitating balancing among the output currents of the respective DC/DC converters connected, in parallel to one another, to the load.

### BRIEF DESCRIPTION OF DRAWINGS

FIG. 1 illustrates a drooping characteristic of a DC/DC converter.
FIG. 2 illustrates the relationship between a voltage range of output voltage of the DC/DC converter and the output current thereof.
FIG. 3 is a schematic block diagram of a power supply system including DC/DC converters according to an exemplary embodiment.
FIG. 4 is a detailed block diagram of a DC/DC converter according to the embodiment.
FIG. 5 is a schematic block diagram of a power supply system of Comparative Example including DC/DC converters of Comparative Example.
FIG. 6 illustrates correlations between output currents and a load of the system involving two DC/DC converters.
FIG. 7 illustrates correlations between output currents and a load of the system including six DC/DC converters.
FIG. 8 is a block diagram of a DC/DC converter according to Modified Example according to the embodiment.

### DESCRIPTION OF EMBODIMENTS

### Underlying Knowledge Forming Basis of Present Disclosure

A viewpoint of inventors will be described below.

A power supply system including DC/DC converters connected, in parallel to one another, to a common load has been known. Each DC/DC converter is controlled to supply a direct-current (DC) power to the load. In this power supply system, components constituting each DC/DC converter may have variations in their characteristics, thereby causing possible differences in output voltages of the DC/DC converters. The differences of the output voltages of the DC/DC converters may cause a DC/DC converter to output the highest voltage to preferentially supply a current to the load. As a result, the DC/DC converter outputting an excessively large current may possibly halt its operation through the execution of a heat or overcurrent protection function. In order to avoid this situation, it is necessary to equalize output currents supplied from the DC/DC converters, that is, to balance the output currents of the DC/DC converters.

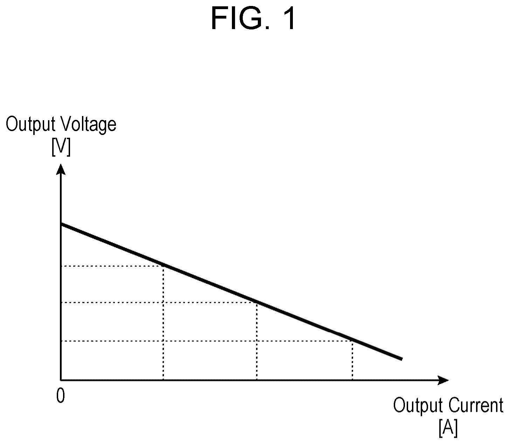

In order to solve the above problem, the switching power supply system disclosed in PTL 1 is configured to control a duty ratio of a PWM signal for driving a switching element included in each switching power supply such that the switching power supply has a drooping characteristic. The drooping characteristic herein refers to a characteristics in which the output voltage drops according to an increase of the output current. FIG. 1 illustrates the drooping characteristic. In drooping characteristic shown in FIG. 1, the output voltage drops along a constant slope according to an increase of the output current.

However, the switching power supply system disclosed in PTL 1 provides a problem that output currents of the switching power supplies are hardly balanced in the case where, for example, the range of the output voltage is relatively small, e.g., a few tenths of a volt. For example, an uninterruptible power system used in online systems and data centers requires a strict voltage output to increase power efficiency, resulting in a relatively small range of the output voltage as described above.

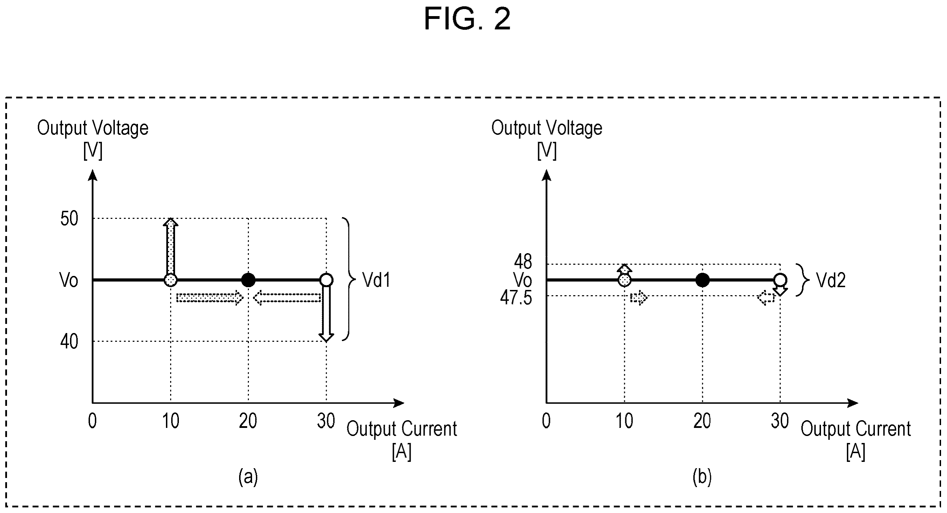

FIG. 2 illustrates the relationship between the voltage range of the output voltage and the output current. FIG. 2(a) illustrates the relationship between voltage range Vdl1 of the output voltage and the output current in the case where voltage range Vd1 is 10 V. FIG. 2(b) illustrates the relationship between voltage range Vd2 of the output voltage and the output current in the case where voltage range Vd2 is 0.5 V. As shown in FIG. 2(a), in the case where voltage range Vd1 of the output voltage is relatively large, the output current is regulated in a relatively wide range such that the output current is increased by raising the output voltage or the output current is decreased by lowering the output voltage. On the other hand, as shown FIG. 2(b), in the case where voltage range Vd2 of the output voltage is relatively small, the output current is regulated only in a relatively narrow range.

The following problem is thus raised in cases where the voltage range of the output voltage is relatively small as described above. It is difficult to balance among the output currents of the switching power supplies only by performing control so that each of the switching power supplies has individual drooping characteristics independently of one another, as the switching power supply system disclosed in PTL 1. This is because the range within which the output current is regulated is relatively small.

In view of the above, the inventors have created the present disclosure.

Exemplary embodiments of the present disclosure will be described below with reference to accompanying drawings.

The embodiments described below will show general or specific examples. Features, such as numerical values, shapes, constituent elements, and arrangement positions and coupling modes of the constituent elements, shown in the following embodiments are mere examples, and therefore are not intended to impose any limitation on the present disclosure. Moreover, of the constituent elements in the following embodiments, constituent elements not recited in any one of the independent claims are described as optional constituent elements.

The drawings are schematic diagrams, and do not necessarily provide strictly accurate illustrations. Therefore, for example, scales and the like do not necessarily coincide with one another throughout the drawings. Moreover, throughout the drawings, substantially identical elements are designated by the same numerals and symbols, and their duplicate explanations are omitted or simplified.

Moreover, the present descriptions use terms such as "perpendicular," "parallel," and "equal" representing relationships between elements as well as terms such as "rectangular," and "circular" representing forms of elements, and numerical values as well as numerical ranges. Each of such terms, values, and ranges is not limited to precise meaning thereof, but also includes variations that fall within an essentially equivalent range, such as a degree of error of approximately a few percent (e.g., about 10%).

### Exemplary Embodiment

### 1. Configuration

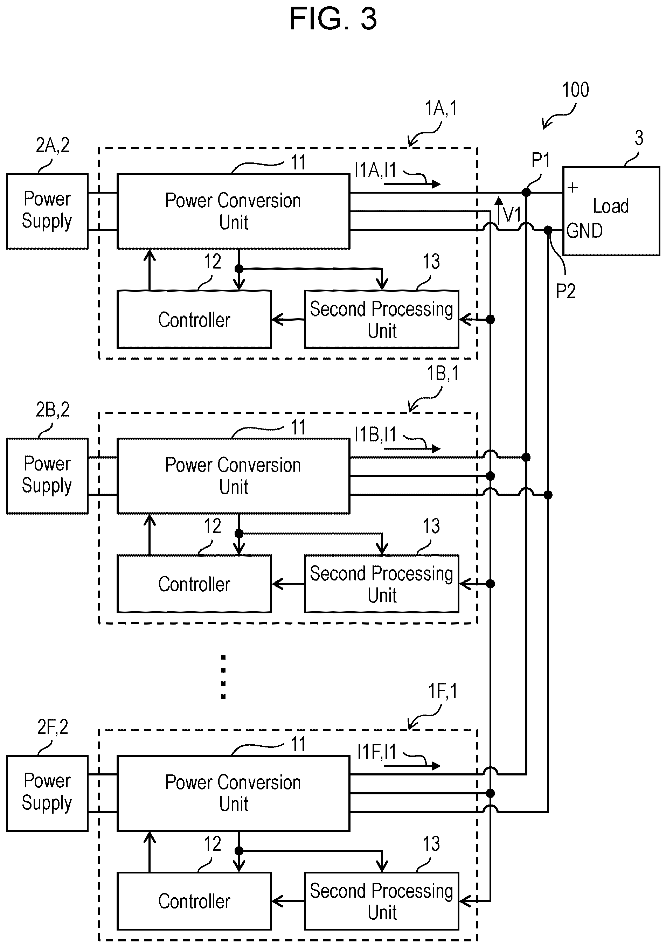

DC/DC converter 1 and power supply system 100 according to an exemplary embodiment will be described below. FIG. 3 is a schematic block diagram illustrating a configuration of power supply system 100 including DC/DC converters 1 according to the embodiment. Power supply system 100 includes, as shown in FIG. 3, plural (six in this case) of DC/DC converters 1, plural (six in this case) of power supplies 2, and load 3. DC/DC converters 1 is connected, in parallel to one another, to common output terminals P1 and P2.

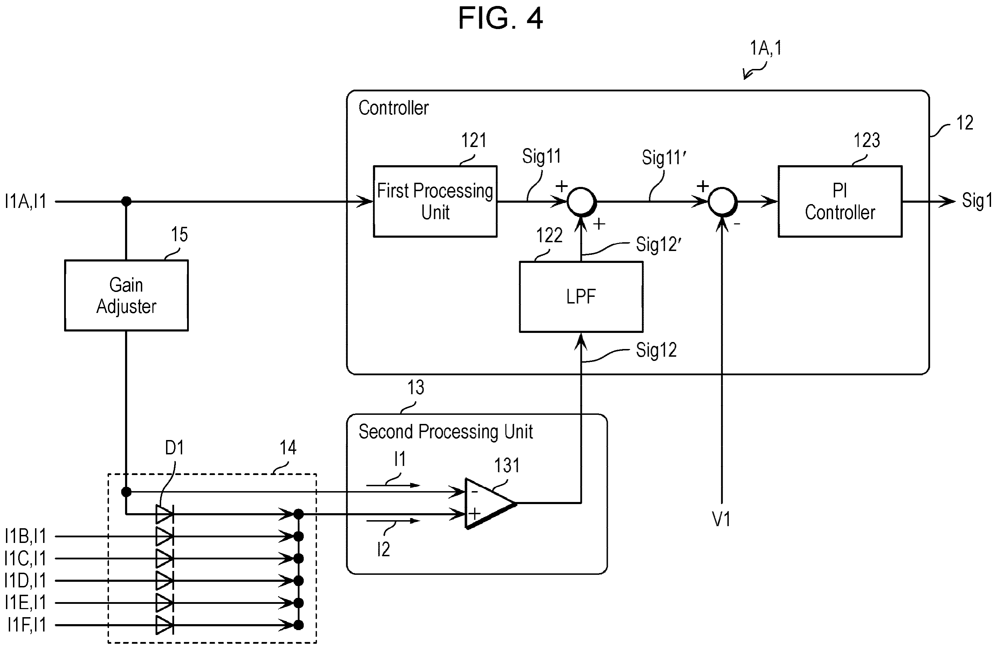

Hereinafter, when distinguishing DC/DC converters 1 from one another, they are referred to as "DC/DC converter 1A," "DC/DC converter 1B," ..., and "DC/DC converter 1F" from the top in FIG. 3. When distinguishing power supplies 2 from one another, they are referred to as "power supply 2A," "power supply 2B," ..., and "power supply 2F" from the top in FIG. 3. When distinguishing output currents I1 output from DC/DC converters 1, respectively, they are referred to as "output current I1A," "output current I1B," "output current I1C," "output current I1D," "output current I1E," and "output current I1F" from the top in FIG. 3. Note that, regarding output currents I1B, I1C, I1D, and I1E, see FIG. 4.

Each of power supplies 2 is a battery configured to supply a DC power to a corresponding one of DC/DC converters 1. Power supplies 2A, 2B, ..., and 2F supply DC powers to DC/DC converters 1A, 1B, ..., and 1F, respectively. In accordance with the embodiment, each power supply 2 is a lithium-ion battery. Each power supply 2 may be another type of element, such as a solar power panel, as long as it is configured to supply the DC power.

Load 3 is connected to output terminals P1 and P2, and receives the DC power from each DC/DC converter 1. Specifically, the sum of output currents I1 from all DC/DC converters 1 flow into load 3. In accordance with the embodiment, the sum of output currents I1A, I1B, I1C, I1D, I1E, and I1F flow into load 3. In accordance with the embodiment, load 3 is a single one but may be plural ones.

DC/DC converters 1 will be detailed below with reference to FIGS. 3 and 4. FIG. 4 is a detailed block diagram of DC/DC converter 1 according to the embodiment. All DC/DC converters 1A, 1B, ..., and 1F have the same configuration. Therefore, unless otherwise specified, the following description will focus on DC/DC converter 1A.

DC/DC converter 1 (DC/DC converter 1A in this case) is, e.g., an insulated forward converter. DC/DC converter 1 does not necessarily have this configuration, and may be either a flyback converter or a non-insulated converter. DC/DC converter 1 includes power conversion unit 11, controller 12, and second processing unit 13, as shown in FIG. 3.

Power conversion unit 11 is configured to convert the DC power supplied from power supply 2 (power supply 2A in this case), and then, output the converted DC power to output terminals P1 and P2 which are commonly used by other one or more DC/DC converters 1 (DC/DC converters 1B, ..., and 1F in this case). Power conversion unit 11 is, e.g., a switching power supply including one or more switching elements. Power conversion unit 11 is configured to control both output voltage V1 and output current I1 (output current I1A in this case) in accordance with control signal Sig1 for driving the one or more switching elements.

Controller 12 is configured to control power conversion unit 11 by supplying control signal Sig1 to the one or more switching elements of power conversion unit 11. In accordance with the embodiment, control signal Sig1 is a PWM signal, a digital signal; however, control signal Sig1 may be an analog signal having been converted with a digital-to-analog converter (DAC). Controller 12 includes a processor and a memory, thereby serving various functions by the processor executing programs stored in the memory. In accordance with the embodiment, controller 12 is a microcomputer. Controller 12 includes first processing unit 121, low-pass filter (LPF) 122, and proportional-integral (PI) controller 123, as shown in FIG. 4.

Controller 12 obtains target signal Sigll as follows. First processing unit 121 outputs target signal Sig11 for output voltage V1 such that power conversion unit 11 has a drooping characteristic in which output voltage V1 of power conversion unit 11 drops according to an increase of output current I1 of power conversion unit 11. Specifically, first processing unit 121 receives a detected value of output current I1 (output current I1A in this case). The detected value of output current I1 is obtained with a current detector, such as a current transformer included in a feedback current path of output current I1. Then, upon receiving the detected value of output current I1, first processing unit 121 determines a target value for output voltage V1 corresponding to output current I1 in accordance with data indicating the drooping characteristic (see FIG. 1, for example), with the data being stored previously in the memory. Then, first processing unit 121 outputs target signal Sig11 that indicates the determined target value for output voltage V1.

Low-pass filter 122 is a digital filter configured to pass components of correction signal Sig12 with frequencies equal to or lower than a predetermined frequency (e.g., 1 kHz) which are out of the components of correction signal Sig12 (to be described later) output from second processing unit 13. Hereinafter, correction signal Sig12 having passed through low-pass filter 122 is referred to as "correction signal Sig12'."

PI controller 123 outputs control signal Sig1 based on corrected target signal Sig11'. Corrected target signal Sig11' is a signal obtained by adding correction signal Sig12 output from second processing unit 13 to target signal Sig11 output from first processing unit 121. In accordance with the embodiment, correction signal Sig12 has passed through low-pass filter 122. Therefore, corrected target signal Sig11' is a signal obtained by adding correction signal Sig12' having passed through low-pass filter 122 to target signal Sig11 output from first processing unit 121.

PI controller 123 generates control signal Sig1 by performing proportional control and integral control such that a difference between the target value for output voltage V1 indicated by corrected target signal Sig11' and the detected value of output voltage V1 becomes zero. PI controller 123 outputs the generated control signal Sig1. The detected value of output voltage V1 is obtained with a voltage detector disposed in a current path connected to positive output terminal P1 out of output terminals P1 and P2.

Second processing unit 13 is composed of a discrete integrated circuit (IC). Second processing unit 13 outputs correction signal Sig12 based on a difference between output current I1 (output current I1A in this case) and representative current I2. Representative current I2 is a current representing output current I1 and other one or more output currents I1 (output currents I1B, I1C, I1D, I1E, and I1F in this case) output from the other one or more DC/DC converters 1.

In accordance with the embodiment, second processing unit 13 includes differential amplifier 131. Differential amplifier 131 amplifies the difference between output current I1 and representative current I2, and the resulting signal is output as correction signal Sig12 from second processing unit 13. Specifically, a signal indicating representative current I2 is supplied to the non-inverting input terminal (+ terminal) of differential amplifier 131, and a signal indicating output current I1 is supplied to the inverting input terminal (- terminal) of differential amplifier 131. Then, differential amplifier 131 outputs correction signal Sig12 having a positive value when representative current I2 exceeds output current I1, and outputs correction signal Sig12 having a zero value when output current I1 exceeds representative current I2. The gain of differential amplifier 131 may be a default value, or may be optionally adjusted by a user or installer of power supply system 100. Second processing unit 13 may be composed of a microcomputer.

First current output unit 14 receives output current I1 (output current I1A in this case) and the other one or more output currents I1 (output currents I1B, I1C, I1D, I1E, and I1F in this case). Then, first current output unit 14 outputs, as representative current I2, the maximum current among output current I1 and the other one or more output currents I1. Specifically, first current output unit 14 includes plural (six in accordance with this embodiment) of diodes D1 with cathodes are connected, in parallel to one another, to the non-inverting input terminal of differential amplifier 131 of second processing unit 13. The anodes of the diodes D1 receive respective signals that indicate respective output currents I1A, I1B, I1C, I1D, I1E, and I1F. Therefore, first current output unit 14 outputs only the highest-voltage signal among the signals supplied to respective diodes D1, which results in the outputting of the maximum current, as representative current I2, among output current I1 and the other one or more output currents I1.

Gain adjuster 15 is composed of an analog IC including a differential amplifier circuit. Gain adjuster 15 converts the detected value of output current I1 (output current I1A in this case) to a normalized voltage value, and outputs the resulting value. Specifically, gain adjuster 15 converts the detected value of output current I1 ranging from 0 (zero) to the maximum current to the normalized voltage value ranging from 0 (zero) to 7 V. The output signal from gain adjuster 15 is a signal that substantially indicates output current I1, and is output to second processing unit 13. Further, the output signal from gain adjuster 15 is output as a CAN signal to the other one or more DC/DC converters 1 (DC/DC converters 1B, ..., and 1F in this case). The output signal from gain adjuster 15 may be output as an analog signal to the other one or more DC/DC converters 1 (DC/DC converters 1B, ..., and 1F in this case) or, alternatively, may be converted to a digital signal indicating current information (information indicating output currents I1A to I1F in this case), thereby being shared via CAN communications or Modbus communications.

As described above, in DC/DC converter 1 according to the embodiment, controller 12 controls output voltage V1 in accordance with target signal Sig11' corrected based on correction signal Sig12. In other words, controller 12 controls output voltage V1 not by using the target value for output voltage V1 that is determined merely in accordance with the drooping characteristics, but by using the target value for output voltage V1 that is determined in accordance with both the drooping characteristic and the other one or more output currents I1 (output currents I1B, I1C, I1D, I1E, and I1F in this case).

For example, when output current I1 (output current I1A in this case) is smaller than the other one or more output currents I1 (output currents I1B, I1C, I1D, I1E, and I1F in this case), correction signal Sig12 output from second processing unit 13 has a value of zero. In this case, corrected target signal Sig11' is equal to target signal Sig11 output from first processing unit 121. That is, in this case, controller 12 controls output voltage V1 by using the target value for output voltage V1 that is determined in accordance with the drooping characteristics.

On the other hand, when output current I1 is smaller than the other one or more output currents I1, correction signal Sig12 output from second processing unit 13 has a positive value. In this case, corrected target signal Sig11' is obtained by adding correction signal Sig12 to target signal Sig11 output from first processing unit 121. That is, in this case, controller 12 controls output voltage V1 by using the target value for output voltage V1 that is obtained by adding the value based on the other one or more output currents I1 to the target value for output voltage V1 determined in accordance with the drooping characteristics. Specifically, in this case, controller 12 performs control increasing output voltage V1 to increase output current I1.

### 2. Advantages

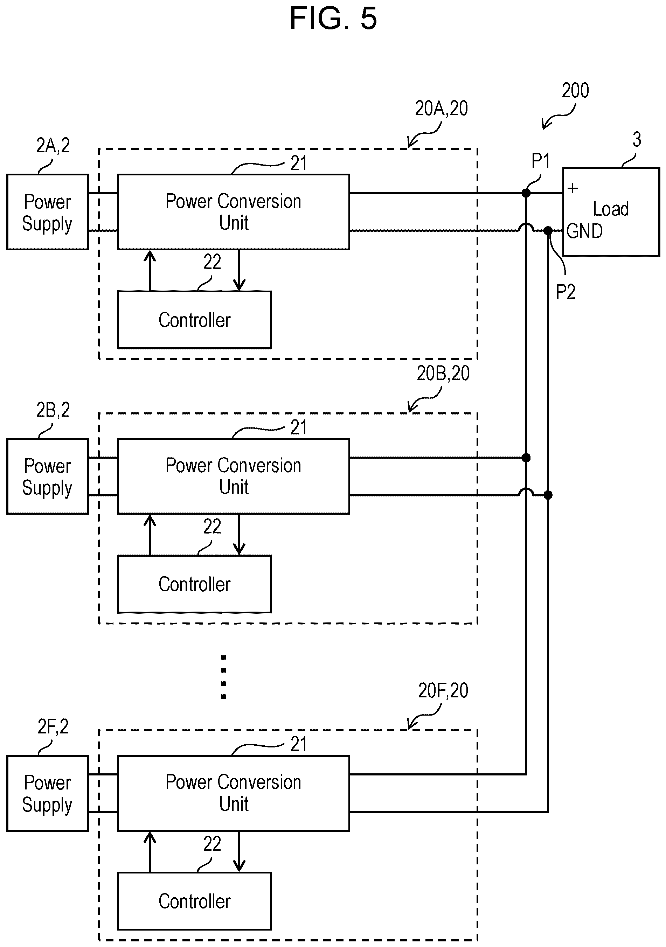

Advantages of DC/DC converter 1 and power supply system 100 according to the embodiment will be described below comparing it with DC/DC converter 20 and power supply system 200 of Comparative Examples. FIG. 5 is a schematic block diagram of power supply system 200 of a Comparative Example that includes DC/DC converters 20 of the Comparative Example.

DC/DC converter 20 of the Comparative Example includes power conversion unit 21 and controller 22. Power conversion unit 21 has the same configuration as that of power conversion unit 11 of DC/DC converter 1 according to the embodiment. On the other hand, controller 22 controls power conversion unit 21 such that power conversion unit 21 has a drooping characteristic as in the case of the switching power supply disclosed in PTL 1.

That is, DC/DC converter 20 of the Comparative Example is different from DC/DC converter 1 according to the embodiment in that output voltage V1 is controlled by using the target value for output voltage V1 determined in accordance with the drooping characteristic. Further, power supply system 200 of the Comparative Example is different from power supply system 100 according to the embodiment in that power supply system 200 includes plural (six in this case) of DC/DC converters 20 of the Comparative Example.

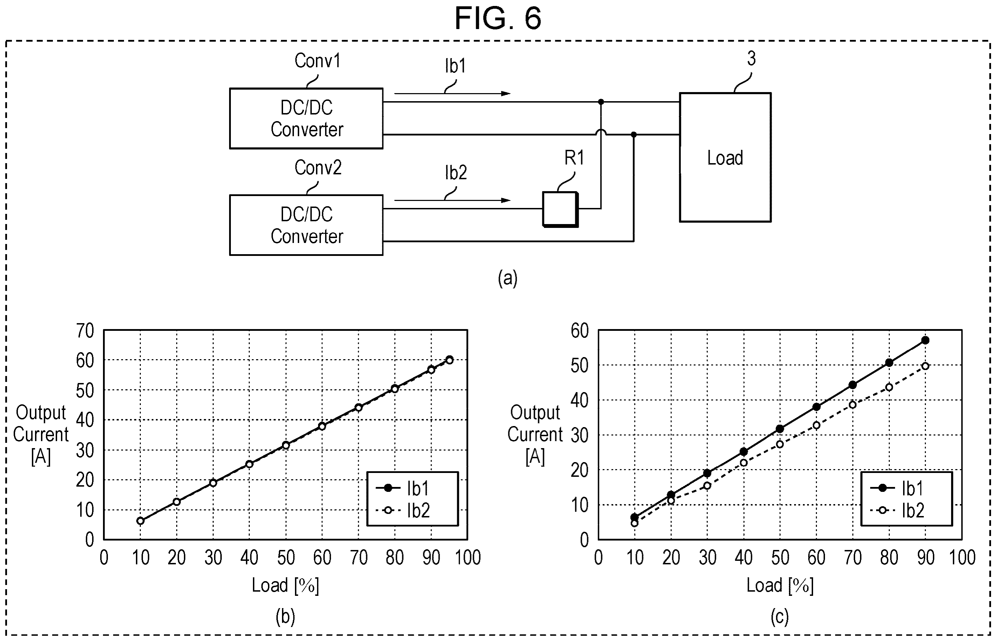

First, with reference to FIG. 6, a comparison between a case where two DC/DC converters 1 according to the embodiment are connected, in parallel to one another, to load 3 and another case where two DC/DC converters 20 of the Comparative Example are connected, in parallel to one another, to load 3 will be described below. FIG. 6 illustrates correlations between output currents and loads in the case involving two DC/DC converters.

FIG. 6(a) illustrates a configuration in which two DC/DC converters Conv1 and Conv2 are connected, in parallel to one another, to load 3. The output current of DC/DC converter Conv1 is referred herein to as "output current Ib1," and the output current of DC/DC converter Conv2 is referred herein to as "output current Ib2." In this case, resistor R1 of 1 mΩ is inserted between DC/DC converter Conv2 and load 3, thereby imitating variations in characteristics of the components constituting each of DC/DC converters Conv1 and Conv2.

FIG. 6(b) illustrates a correlation between the output currents and the load in the case where both two DC/DC converters Conv1 and Conv2 are DC/DC converters 1 according to the embodiment. In this case, as shown in FIG. 6(b), output currents Ib1 and Ib2 are substantially equal to each other regardless of fluctuations in the load. That is, in this case, output currents Ib1 and Ib2 of respective DC/DC converters Conv1 and Conv2 are balanced.

FIG. 6(c) illustrates a correlation between the output currents and the load in the case where both two DC/DC converters Conv1 and Conv2 are DC/DC converters 20 of the Comparative Example. In this case, as shown in FIG. 6(c), differences between output currents Ib1 and Ib2 are produced. That is, in this case, output currents Ib1 and Ib2 of DC/DC converters Conv1 and Conv2 are not balanced.

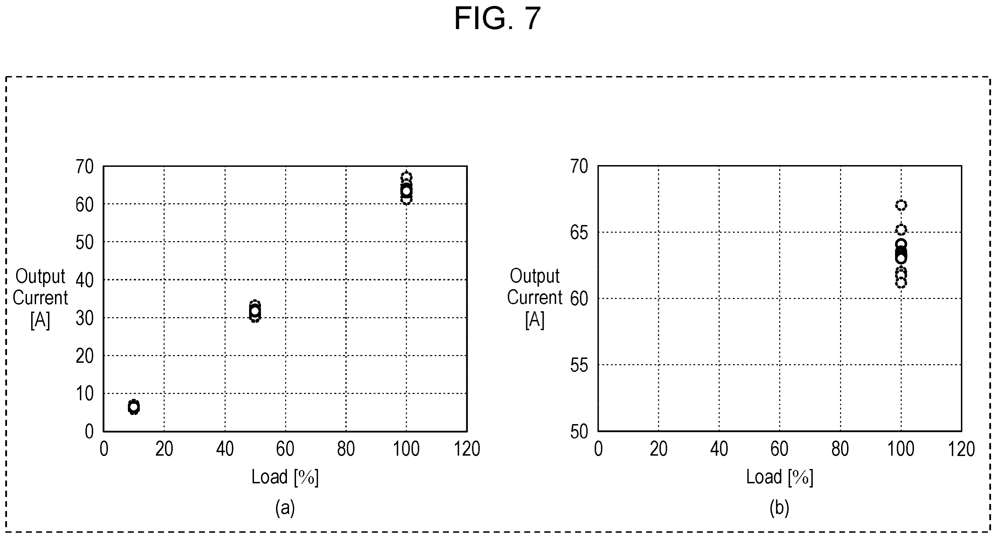

Next, a comparison between a case where six DC/DC converters 1 according to the embodiment are connected, in parallel to one another, to load 3 and a case where six DC/DC converters 20 of the Comparative Example are connected, in parallel to one another, to load 3 will be described with reference to FIG 7. FIG. 7 illustrates correlations between output currents and a load in the case involving six DC/DC converters. In FIG. 7, circles with solid lines represent the output currents of DC/DC converters 1 according to the embodiment. In FIG. 7, circles with dashed lines represent the output currents of DC/DC converters 20 of the Comparative Example. FIG. 7(b) is an enlarged graph of FIG. 7(a).

As shown in FIG. 7(a), the output currents of respective DC/DC converters 1 according to the embodiment are substantially equal to one another regardless of fluctuations of the load. On the other hand, variations occur in the output currents of respective DC/DC converters 20 of the Comparative Example as the load increases. In particular, as shown in FIG. 7(b), for the maximum load (100%), DC/DC converters 20 of the Comparative Example exhibit significantly larger variations in the output currents, than DC/DC converters 1 according to the embodiment.

As described above, in DC/DC converters 1 according to the embodiment, controller 12 controls output voltage V1 in accordance with target signal Sig11' corrected based on correction signal Sig12. Therefore, DC/DC converters 1 according to the embodiment control output voltage V1 not only in accordance with the drooping characteristic, but also in consideration of the other one or more output currents I1 (output currents I1B, I1C, I1D, I1E, and I1F in this case). This configuration facilitates reducing variations of output currents I1 of respective DC/DC converters 1. That is, DC/DC converter 1 according to the embodiment has an advantage of facilitating balancing output currents I1 of DC/DC converters 1 to be connected, in parallel to one another, to load 3.

In particular, DC/DC converter 1 according to the embodiment has an advantage of facilitating balancing output currents I1 of respective DC/DC converters 1 even with a relatively small range of output voltage V1 that is commonly found in uninterruptible power supply devices used in, e.g., an online system and data center. DC/DC converter 1 according to the embodiment may be used for purposes other than those described above.

DC/DC converter 1 according to the embodiment has another advantage as follows. Controller 12 including low-pass filter 122 reduces excessive fluctuations of correction signal Sig12, thereby balancing output currents I1 of respective DC/DC converters 1.

That is, correction signal Sig12 output from second processing unit 13 is a signal that varies in accordance with representative current I2, i.e., in accordance with variations in output currents I1 of DC/DC converters 1. For this reason, when correction signal Sig12 is added to target signal Sig11, the target value for output voltage V1 excessively reflects the variations of output currents I1 of DC/DC converters 1. This may disadvantageously cause output currents I1 of respective DC/DC converters 1 to be hardly balanced.

In contrast, in DC/DC converter 1 according to the embodiment, correction signal Sig12' having passed through low-pass filter 122 is added to target signal Sig11. Therefore, the target value for output voltage V1 gently changes while reflecting the variations of output currents I1 of respective DC/DC converters 1, thereby facilitating balancing output currents I1 of respective DC/DC converters 1.

### Other Embodiment

DC/DC converter 1 and power supply system 100 according to the exemplary embodiment, have been described above, but the present disclosure is obviously not limited to such exemplary embodiments. Other forms in which various modifications apparent to those skilled in the art are applied to the embodiments, or forms structured by combining structural elements of different aspects of the embodiments may be included within the scope of the present disclosure, unless such changes and modifications depart from the scope of the present disclosure.

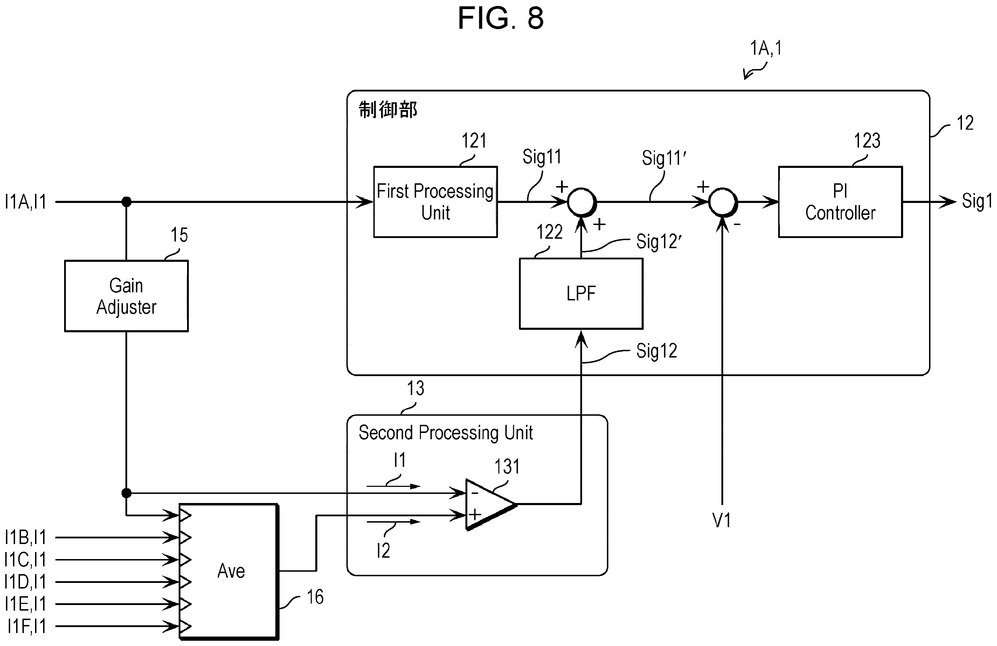

FIG. 8 is a block diagram of DC/DC converter 1 according to a Modified Example of the embodiment for showing a detail configuration thereof. DC/DC converter 1 according to the Modified Example is different from DC/DC converter 1 according to the embodiment in that DC/DC converter 1 according to the Modified Example includes second current output unit 16 instead of first current output unit 14. In the following, a description of points common to DC/DC converter 1 according to the embodiment will be omitted.

Second current output unit 16 is implemented by, e.g., a microcomputer. Second current output unit 16 receives output current I1 (output current I1A in this case) and other one or more output currents (output currents I1B, I1C, I1D, I1E, and I1F in this case). Then, second current output unit 16 outputs, as representative current I2, an average current of output current I1 and the other one or more output currents I1. Upon receiving output currents I1 of respective DC/DC converters 1, second current output unit 16 calculates an average value of the current values of output currents I1.

DC/DC converter 1 according to the Modified Example controls output voltage V1 in consideration of the other one or more output currents I1 (output currents I1B, I1C, I1D, I1E, and I1F in this case), as in the case of DC/DC converter 1 according to the embodiment. Therefore, it facilitates reducing variations in output currents I1 of respective DC/DC converters 1.

In the embodiment described above, the drooping characteristic is set such that output voltage V1 drops at a constant slope as output current I1 increases. However, the drooping characteristic is not limited to this. For example, the drooping characteristic may be set such that output voltage V1 drops non-linearly as output current I1 increases.

In the embodiment described above, controller 12 causes PI controller 123 to generate and output control signal Sig1. However, controller 12 is not limited to this. For example, controller 12 may include a proportional-integral-differential (PID) controller instead of PI controller 123, thereby generating and outputting control signal Sig1 through PID control.

In the embodiment described above, controller 12 includes none of second processing unit 13, first current output unit 14, and gain adjuster 15; however, controller 12 may include these units. Further, in the Modified Example of the embodiment described above, controller 12 includes none of second processing unit 13, gain adjuster 15, and second current output unit 16; however, controller 12 may include these units.

In the embodiment described above, DC/DC converters of power supply system 100 may include DC/DC converters other than DC/DC converters 1 according to the embodiment. For example, even if one DC/DC converter out of the DC/DC converters is DC/DC converter 20 of the Comparative Example, it is also possible to achieve the effect of balancing output currents I1 of respective DC/DC converters 1.

### Summary

As described above, DC/DC converter 1 according to a first aspect of the present disclosure includes power conversion unit 11, controller 12, and second processing unit 13. Power conversion unit 11 is configured to convert a DC power supplied from power supply 2, and output the converted DC power to output terminals P1 and P2 which are commonly used by other one or more DC/DC converters 1A, 1B, ..., and 1F. Controller 12 includes first processing unit 121 to control power conversion unit 11. First processing unit 121 is configured to output target signal Sig11 for output voltage V1 so as to provide a drooping characteristic in which output voltage V1 of power conversion unit 11 drops as output current I1 of power conversion unit 11 increases. Second processing unit 13 is configured to output correction signal Sig12 based on a difference between output current I1 and representative current I2 which is one of output current I1 and other one or more output currents I1A, I1B, ..., and I1F output from the other one or more DC/DC converters 1A, 1B, ..., and 1F. Upon receiving target signal Sig11' corrected based on correction signal Sig12, controller 12 is configured to control output voltage V1 in accordance with target signal Sig11' corrected based on correction signal Sig12.

In this configuration, output voltage V1 is controlled not only in accordance with the drooping characteristic, but also in consideration of the other one or more output currents I1. This configuration facilitates reducing variations of output currents I1 of respective DC/DC converters 1. That is, this configuration has an advantage of facilitating balancing output currents I1 of DC/DC converters 1 connected, in parallel to one another, to load 3.

DC/DC converter 1 according to a second aspect of the present disclosure, in the first aspect, further includes first current output unit 14. First current output unit 14 is configured to receive output current I1 and the other one or more output currents I1. Then, first current output unit 14 is configured to output, as representative current I2, the maximum current among output current I1 and the other one or more output currents I1.

In accordance with this configuration, output voltage V1 is controlled such that a difference between output current I1 of DC/DC converter 1 and the largest one among output currents I1 of DC/DC converters 1 becomes zero. This provides an advantage of facilitating balancing output currents I1 of respective DC/DC converters 1.

DC/DC converter 1 according to a third aspect of the present disclosure, in the first aspect, further includes second current output unit 16. Second current output unit 16 is configured to receive output current I1 and other one or more output currents I1A, I1B, ..., and I1F, and then, output, as representative current I2, an average current of output current I1 and the other one or more output currents I1.

In this configuration, output voltage V1 is controlled such that a difference between output current I1 of DC/DC converter 1 and the average current of output currents I1A, I1B, ..., and I1F of DC/DC converters 1A, 1B, ..., and 1F becomes zero. This provides an advantage of facilitating balancing output currents I1, I1A, I1B, ..., and I1F of DC/DC converters 1, 1A, 1B, ..., and 1F.

In DC/DC converter 1 according to a fourth aspect of the present disclosure, in any one of the first to third aspects, second processing unit 13 includes differential amplifier 131 configured to amplify a difference between output current I1 and representative current I2. Second processing unit 13 is configured to output the amplified signal as correction signal Sig12.

In this configuration, correction signal Sig12 is adjusted by setting the gain of differential amplifier 131 to an appropriate value. This provides an advantage of facilitating balancing output currents I1 of respective DC/DC converters 1.

In DC/DC converter 1 according to a fifth aspect of the present disclosure, in any one of the first to fourth aspects, controller 12 further includes low-pass filter 122. Controller 12 is configured to control output voltage V1 in accordance with target signal Sig11' corrected based on correction signal Sig12' having passed through low-pass filter 122.

In this configuration, low-pass filter 122 reduces excessive fluctuations of correction signal Sig12, resulting in facilitating balancing output currents I1, I1A, I1B, ..., and I1F of respective DC/DC converters 1, 1A, 1B, ..., and 1F.

Power supply system 100 according to a sixth aspect of the present disclosure includes DC/DC converter 1 according to any one of the first to fifth aspects, power supply 2, and load 3. Power supply 2 is configured to supply a DC power to DC/DC converter 1. Load 3 is connected to output terminals P1 and P2 and configured to receive the DC power supplied from DC/DC converter 1.

In the configuration, output voltage V1 is controlled not only in accordance with the drooping characteristic, but also in consideration of the other one or more output currents I1. This facilitates reducing variations in output currents I1, I1A, I1B, ..., and 11F of respective DC/DC converters 1, 1A, 1B, ..., and 1F. That is, the configuration provides an advantage of facilitating balancing output currents I1, I1A, I1B, ..., and I1F of DC/DC converters 1, 1A, 1B, ..., and 1F connected, in parallel to one another, to load 3.

In power supply system 100 according to a seventh aspect of the present disclosure, in the sixth aspect, DC/DC converter 1 and the other one or more DC/DC converters 1A, 1B, ..., and 1F are connected, in parallel to one another, to output terminals P1 and P2.

In this configuration, output voltage V1 is controlled not only in accordance with the drooping characteristics, but also in consideration of the other one or more output currents I1. This facilitates reducing variations of output currents I1, I1A, I1B, ..., and I1F of DC/DC converters 1, 1A, 1B, ..., and 1F. That is, the configuration provides an advantage of facilitating balancing output currents I1, I1A, I1B, ..., and I1F of DC/DC converters 1, 1A, 1B, ..., and 1F connected, in parallel to one another, to load 3.

### INDUSTRIAL APPLICABILITY

The present disclosure is useful as a power supply circuit for use in various devices, such as uninterruptible power supply devices.

### EFERENCE MARKS IN THE DRAWINGS

1, 1A,1B, ..., 1F DC/DC converter
11 power conversion unit
12 controller
121 first processing unit
122 low-pass filter
123 PI controller
13 second processing unit
131 differential amplifier
14 first current output unit
15 gain adjuster
16 second current output unit
2, 2A, 2B, ..., 2F power supply
3 load
100 power supply system
20, 20A, 20B, ..., 20F DC/DC converter of Comparative Example
21 power conversion unit
22 controller
200 power supply system of Comparative Example
Conv1, Conv2 DC/DC converter
D1 diode
I1, I1A, I1B, I1C, I1D, I1E, 11F output current
Ib1, Ib2 output current
I2 representative current
P1, P2 output terminal
R1 resistor
Sig1 control signal
Sig11 target signal
Sig11' corrected target signal
Sig12, Sig12' correction signal
V1 output voltage
Vd1, Vd2 voltage range

## Claims

1. A DC/DC converter comprising:
a power conversion unit configured to convert a direct-current (DC) power supplied from a power supply, and output the converted DC power to an output terminal to which other one or more DC/DC converters commonly output respective one or more DC powers;
a controller configured to control the power conversion unit, the controller including a first processing unit configured to output a target signal for an output voltage of the power conversion unit such that the output voltage has a drooping characteristic in which the output voltage of the power conversion unit drops according to an increase of an output current of the power conversion unit; and
a second processing unit configured to output a correction signal based on a difference between the output current and a representative current among the output current and other one or more output currents output from the other one or more DC/DC converters, wherein
the controller is configured to:
obtain the target signal corrected based on the correction signal; and
control the output voltage in accordance with the target signal corrected based on the correction signal.

2. The DC/DC converter according to claim 1, further comprising a first current output unit configured to:
receive the output current and the other one or more output currents; and
output, as the representative current, a maximum current among the output current and the other one or more output currents.

3. The DC/DC converter according to claim 1, further comprising a second current output unit configured to:
receive the output current and the other one or more output currents; and
output, as the representative current, an average current of the output current and the other one or more output currents.

4. The DC/DC converter according to any one of claims 1 to 3, wherein the second processing unit includes a differential amplifier configured to output, as the correction signal, a signal provided by amplifying the difference between the output current and the representative current.

5. The DC/DC converter according to any one of claims 1 to 4, wherein
the controller further includes a low-pass filter, and
the controller is configured to control the output voltage in accordance with the target signal corrected based on the correction signal having passed through the low-pass filter.

6. A power supply system comprising:
the DC/DC converter according to any one of claims 1 to 5;
the power supply configured to supply a DC power to the DC/DC converter; and
a load coupled to the output terminal and configured to receive a DC power suppled from the DC/DC converter.

7. The power supply system according to claim 6, further comprising the other one or more DC/DC converters, wherein the DC/DC converter and the other one or more DC/DC converters are connected, in parallel to one another, to the output terminal.
